# EUROPÄISCHE PATENTSCHRIFT

(11) **EP 0 671 088 B1**
(45) Veröffentlichungstag und Bekanntmachung des Hinweises auf die Patenterteilung: **05.03.1997**
(21) Anmeldenummer: 94900132.5
(22) Anmeldetag: 11.11.1993
(51) Int. Cl.: H04L 5/16

(54) **SCHALTUNGSANORDNUNG ZUM STEUERN EINER MEHRZAHL VON VERBRAUCHERN, INSBESONDERE VORSCHALTGERÄTEN VON LAMPEN**
CIRCUIT ARRANGEMENT FOR CONTROLLING A PLURALITY OF USERS, ESPECIALLY LAMP BALLASTS
CIRCUIT POUR LA COMMANDE D'UN ENSEMBLE DE RECEPTEURS, NOTAMMENT DE REGULATEURS DE PUISSANCE DE LAMPES

(30) Priorität: 24.11.1992 DE 4239448; 06.09.1993 DE 4330114
(43) Veröffentlichungstag der Anmeldung: 13.09.1995
(73) Patentinhaber: Tridonic Bauelemente GmbH, 6850 Dornbirn (AT)
(72) Erfinder: LUGER, Siegfried, A-6850 Dornbirn (AT); WERNER, Walter, A-6850 Dornbirn (AT)
(74) Vertreter: Schmidt-Evers, Jürgen, Dipl.-Ing.
(86) Internationale Anmeldenummer: EP9303166
(87) Internationale Veröffentlichungsnummer: WO9413078

(56) Entgegenhaltungen:
- GB-A- 2 072 467
- GB-A- 2 082 876

## Beschreibung

Die Erfindung bezieht sich auf eine Schaltungsanordnung zum Steuern einer Mehrzahl von Verbrauchern, wie beispielsweise Lampen. Insbesondere bei der Verwendung von Gasentladungslampen benötigt jede dieser Lampen ein eigenes Vorschaltgerat, um der Gasentladungslampe die jeweils notwendige Zünd- bzw. Betriebsspannung zuzuführen. Bei der Verwendung einer Vielzahl solcher Lampen bietet es sich an, die jeweiligen Vorschaltgeräte von einer Zentral-Einheit aus über eine Datenleitung bzw. Bus zentral anzusteuern.

Aus der GB 2.072.467 A, von der im Oberbegriff des Patentanspruches 1 ausgegangen wird, ist eine Schaltungsanordnung bekannt, bei der eine Zentral-Einheit über einen Datenbus mit mehreren Peripherie-Einheiten verbunden ist, deren Funktionen über den Datenbus gesteuert werden. Jede Peripherie-Einheit weist eine Kopplungseinheit auf, die in einen Empfangszweig und in einen Sendezweig aufgeteilt ist. Der Empfangszweig dient der Übertragung von Informationen von der Zentral-Einheit zu der Peripherie-Einheit wobei die Zentral-Einheit Informationen in Form einer modulierten Wechsel- oder Impulsspannung an den Datenbus abgibt. Der Sendezweig dient der Übertragung von Informationen von der Peripherie-Einheit zu der Zentral-Einheit. Hierbei gelangen die Informationen durch die Variation des Ausgangswiderstandes des Sendezweiges von der Peripherie-Einheit auf den Datenbus.

Weiterhin ist aus der EP 0.490.329 A1 eine Schaltungsanordnung zum Steuern der Helligkeit und des Betriebsverhaltens von Gasentladungslampen bekannt. Hierbei steuert eine Zentral-Einheit über einen Bus eine Vielzahl von Vorschaltgeräten für Gasentladungslampen. Ein jedes Vorschaltgerät ist über eine Kopplungseinheit mit dem Bus verbunden. Dabei werden von dem Bus Daten über eine Kondensatorschaltung oder mittels eines Überträgers an das jeweilige Vorschaltgerät übertragen. Sollen Rückmeldesignale von dem Vorschaltgerät zu der Zentral-Einheit übermittelt werden, so ist dann, wenn keine Daten auf dem Bus vorliegen, ein Einkoppeln dieser Signale von dem Vorschaltgerät in den Bus über die gleiche Kopplungseinheit möglich.

Beide bekannten Schaltungsanordnungen weisen zwar die Möglichkeit auf, mittels entsprechender Steuersignale die Peripherie-Einheit in einen Ruhezustand zu bringen, in dem sie nur einen verminderten Strom aufweist, jedoch bleibt der Empfangszweig der Kopplungseinheit auch im Ruhezustand vollständig aktiviert, wodurch der Bus auch dann belastet wird, wenn keine Signale vorliegen. Dies führt insbesondere dann, wenn eine große Anzahl von Peripherie-Einheiten verwendet wird, zu einem erheblichen Stromverbrauch in der Zentral-Einheit.

Weiterhin ist in beiden Schaltungsanordnungen von Nachteil, daß die Kopplungseinheit leicht durch eine Überspannung auf dem Bus beschädigt werden kann. Dies kann beispielsweise dann geschehen, wenn die Schaltungsanordnung im Rahmen üblicher Hausinstallationen, beispielsweise Lampenanlagen, verlegt wird. Ein versehentliches Beschalten des Busses mit einer Netzspannungsleitung - 220 Volt oder 380 Volt - würde die Kopplungseinheit der Schaltungsanordnung sofort beschädigen, wodurch die ganze Anordnung außer Betrieb gesetzt wäre.

Somit liegt der Erfindung die Aufgabe zugrunde, eine Schaltungsanordnug zum Steuern einer Mehrzahl von Verbrauchern der eingangs beschriebenen Art derart weiterzubilden, daß stets ein sicherer Betrieb bei minimalem Stromverbrauch gewährleistet ist.

Diese Aufgabe wird erfindungsgemäß mit den im Patentanspruch 1 angegebenen Mitteln gelöst.

Demnach weist die Kopplungseinheit einen Empfangszweig zur Übertragung von Steuerinformationen von der im Sendebetrieb befindlichen Zentral-Einheit an den der Kopplungseinheit zugeordneten Verbraucher sowie einen Sendezweig zur Übertragung von Rückemeldeinformationen von dem Verbraucher an die im Nichtsendebetrieb befindliche Zentral-Einheit auf. Die Kopplungseinheit weist zudem eine Schalfeinrichtung auf, die den Empfangszweig bei Nichtsendebetrieb der Zentralen Steuereinheit in einen inaktiven Zustand versetzt.

Weiterhin sind, gemäß der Ansprüche 2 bis 8 leicht aufzubauende, vorteilhafte Ausgestaltungen eines Überspannungsschutzes im Sendezweig und im Empfangszweig beschrieben, wobei gemäß der Ansprüche 3 und 4 eine Zusatzschutzeinrichtung gegen Überspannungen am Ausgang des Sendezweiges beschrieben ist, die für den Fall vorgesehen ist, daß der gemäß Anspruch 3 vorgesehene Schalter den Sendezweig nicht ausreichend schnell vom Bus abtrennt.

Gemäß der Ansprüche 8 und 9 besteht eine vorteilhafte Weiterbildung darin, daß die Verbraucher und die Zentral-Einheit an einem gemeinsamen Bus angeschlossen sind, wodurch der Schaltungsaufwand zum Anschließen der Verbraucher an die Zentral-Einheit minimiert ist. Da die Verbraucher von dem Bus mittels der jeweiligen Kopplungseinheiten galvanisch getrennt sind, ist ein unerwünschtes Auftreten von Ausgleichsströmen vermieden, wobei die Verwendung eines Optokopplers die Übertragung rechtekförmiger Signale ermöglicht, ohne hierfür Übertrager einsetzen zu müssen, die in der Anschaffung erheblich teurer sind.

Gemäß der Ansprüche 10 bis 12 ist eine weitere vorteilhafte Ausgestaltung der Erfindung dadurch gegeben, daß die Zentral-Einheit dann, wenn sie keine Datensignale auf den Bus ausgibt, ein Signal ausgibt, dessen Spannungspegel von dem Spannungspegel der Datensignale verschieden ist. Hierdurch wird der Kopplungseinrichtung signalisiert, daß die Zentral-Einheit sich nicht im Sende- sondern im Nichtsendebetrieb befindet, wodurch es auf einfache Weise möglich ist, mittels der Schalteinrichtung, beispielsweise mit einer Zener-Diode, in der Kopplungseinheit den Empfangszweig inaktiv zu schalten.

Gemäß Anspruch 13 ist eine vorteilhafte Weiterbildung dadurch gegeben, daß der Stromverbrauch in der Kopplungseinrichtung beispielsweise durch eine mit einem MOS-Feldeffekttransistor gebildete Konstantstromquelle überwacht wird, so daß bei einer Fehlbeschaltung oder bei einem defekten Bauelement eine weitere Beschäftigung der Schaltungsanordnung vermieden wird.

Schließlich liegt eine vorteilhafte Weiterbildung der Erfindung gemäß Anspruch 14 darin, daß die Kopplungseinheit einen Verpolungsschutz aufweist, der beispielsweise mit einer Gleichrichter-Brückenschaltung gebildet ist. Auf diese Weise ist das Anschließen der Kopplungseinheit an den Bus vereinfacht und gleichzeitig eine Beschädigung der Kopplungseinheit bzw. des Verbrauchers durch Fehlbeschaltung geschützt. Die Gleichrichter-Brückenschaltung bringt insbesondere in Verbindung mit den Optokopplern den Vorteil mit sich, daß die Kopplungseinheit Rechtecksignale weitgehend verzerrungsfrei übertragen kann.

Nachfolgend wird die Erfindung unter Bezugnahme auf die Zeichnungen näher erläutert. Es zeigt:
- Fig. 1: ein Blockschaltbild der Schaltungsanordnung;
- Fig. 2(a) und 2(b): Schaltbilder eines ersten und zweiten Ausführungsbeispieles der Schaltungsanordnung;
- Fig. 3(a) und 3(b): Variationsmöglichkeiten des Ausführungsbeispieles gemäß Fig. 2.

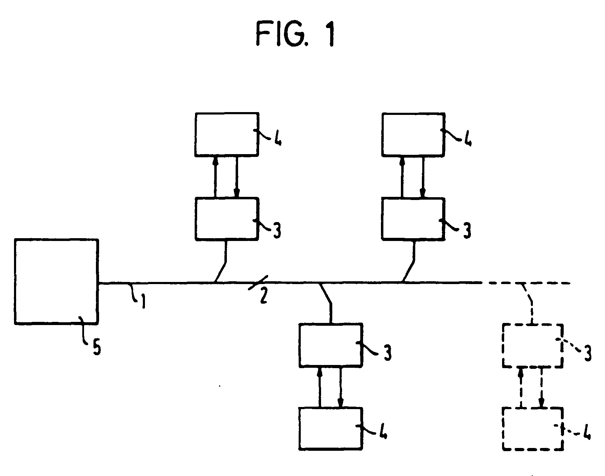

In Fig. 1 ist ein Blockschaltbild dargestellt, bei dem eine Zentral-Einheit bzw. zentrale Steuereinheit 5 mit einem Datenbus bzw. einer Datenleitung 1 verbunden ist. Weiterhin sind an der Datenleitung 1 mehrere Kopplungseinheiten 3 angeschlossen, die die Datenleitung an die Verbraucher 4 bzw. deren jeweiliger Steuereinheit ankoppeln. Die von der Zentral-Einheit 5 auf die Datenleitung ausgegebenen Signale liegen somit zugleich an den Eingängen aller Verbraucher 4 an. Somit ist es notwendig, wenn einzelne Verbraucher angesteuert werden sollen, die Datensignale verbraucherspezifisch zu kodieren. Zur Datenweiterleitung von der Datenleitung 1 zu dem Verbraucher weist die Kopplungseinheit einen Empfangszweig für eine zum Verbraucher gerichtete Verbindung auf. Analog besteht zur Datenübertragung vom Verbraucher zur Datenleitung eine vom Verbraucher zur Kopplungseinheit gerichtete Verbindung, die einen Sendezweig bildet.

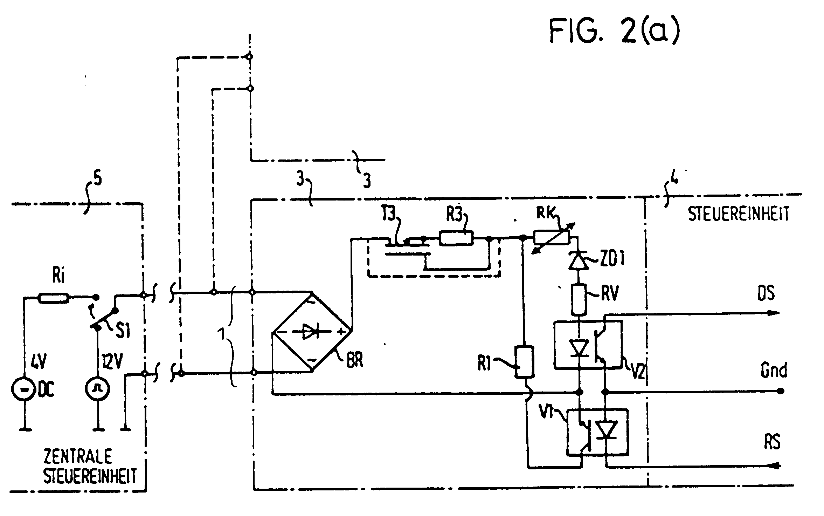

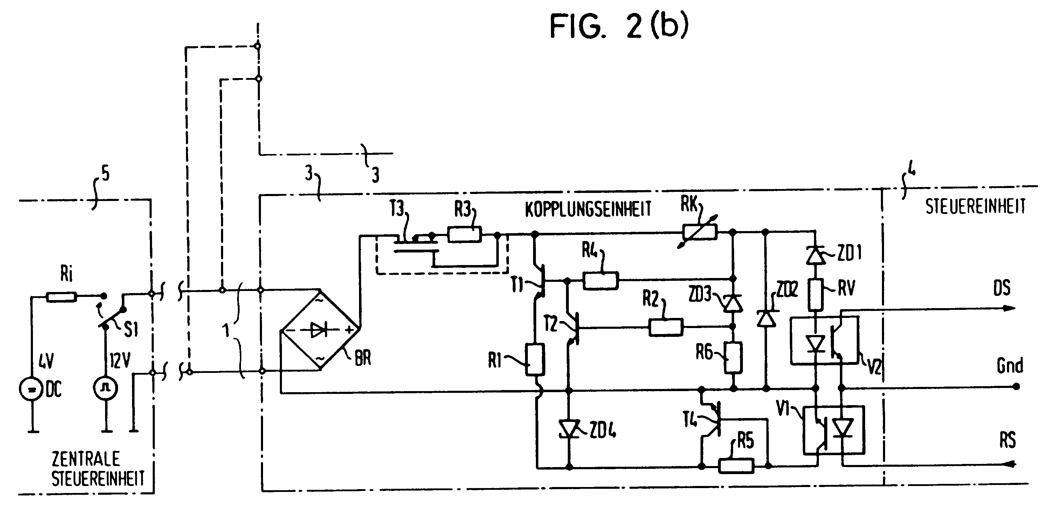

In Fig. 2(a) ist ein Schaltbild zu einem ersten Ausführungsbeispiel der Schaltungsanordnung dargestellt, wobei Verbindungspunkte zwischen zwei Bauelementen als Knotenpunkt mit den Bezugszeichen der Bauelemente bezeichnet wird. Die zentrale Steuereinheit 5 ist an der als Zweidrahtleitung ausgebildeten Datenleitung 1 angeschlossen, wobei die zentrale Steuereinheit 5 einen Signalgenerator aufweist, der rechteckförmige Datensignale erzeugt, die in diesem Fall einen Spitzenpegel von 12 V aufweisen. Weiterhin ist ein Gleichspannungsgenerator DC mit einem Innenwiderstand Ri vorgesehen, der eine Gleichspannung von 4 V abgibt. Beide Generatoren erzeugen ihre Signale gegenüber einem gemeinsamen Massepotential, an das auch der eine der beiden Anschlüsse der Datenleitung 1 angeschlossen ist. Ein Stellschalter S1 ist mit seinem beweglichen Arbeitskontakt an dem zweiten Anschluß der Datenleitung 1 angeschlossen und ist mit seinen feststehenden Auswählkontakten mit jeweils einem Ausgang der beiden Generatoren verbunden.

Am anderen Ende der Datenleitung 1 ist eine Steuereinheit eines Verbrauchers 4 wie beispielsweise ein elektronisches Vorschaltgerät EVG für eine Gasentladungslampe mit seiner Kopplungseinheit 3 angekoppelt. An der Schnittstelle zwischen der Datenleitung 1 und dem elektronischen Vorschaltgerät befindet sich geräteseitig, d.h. in der Kopplungseinheit 3, zunächst eine Gleichrichter-Brückenschaltung BR. Die Wechselspannungsanschlüsse der Brückenschaltung sind mit der Schnittstelle verbunden, während die Anschlüsse +/- mit den nachfolgenden Bauelementen der Kopplungseinheit 3 verbunden sind. An den Plus-Anschluß der Brückenschaltung BR ist ein selbstleitender MOS-Feldeffekttransistor T3 mit seinem Drain-Anschluß verbunden. Zwischen dem Gate-Anschluß und dem Source-Anschluß ist ein Widerstand R3 parallel geschaltet. Gleichzeitig ist eine Serienschaltung, bestehend aus einem Kaltleiter RK, einer Zener-Diode ZD1, einem Widerstand RV und einem Optokoppler V2 zwischen dem Widerstand R3 und dem Minus-Anschluß des Gleichrichters BR angeschlossen, wobei der Anoden-Anschluß der Zener-Diode ZDl über den Widerstand RV mit dem Anoden-Anschluß der Sendediode des Optokopplers V2 verbunden ist. Zur Vereinfachung wird nachfolgend der Minus-Anschluß des Brückengleichrichters BR als Minusleitung bezeichnet.

Das zweite Ausführungsbeispiel, wie es in Fig. 2(b) dargestellt ist, stimmt mit dem zuvor beschriebenen ersten Ausführungsbeispiel überein, weist jedoch zusätzlich die nachfolgend beschriebenenen Schaltungselemente auf. Zwischen dem Knotenpunkt R3/RK und der Minusleitung ist eine Serienschaltung angeschlossen, die der Folge nach aus einem Transistor T1, Widerständen R1 und R5 und dem Ausgang eines Optokopplers V1 besteht. Hierbei ist der Transistor T1 mit seinem Kollektor am Plus-Anschluß des Brückengleichrichters BR und mit seinem Emitter-Anschluß am Widerstand R1 angeschlossen. An dem Basisanschluß des Transistors T1 befindet sich der Kollektor eines Transistors T2, dessen Emitter mit der Minusleitung verbunden ist. Gleichzeitig ist am Kollektor des Transistors T2 ein Anschluß eines Widerstandes R4 angeschlossen, wahrend der andere Anschluß am Knotenpunkt RK/ZD1 angeschlossen ist. Am selben Knotenpunkt ist eine Zener-Diode ZD3 mit ihrer Kathode angeschlossen, während mit ihrer Anode in Serie ein Widerstand R6 zum Minus-Anschluß des Brückengleichrichters verbunden ist. Zwischen dem Basisanschluß des Transistors T2 und dem Knotenpunkt ZD3/R6 ist ein Widerstand R2 angeschlossen. Weiterhin ist zwischen dem Knotenpunkt R1/R5 und der Minusleitung eine Parallelschaltung aus einer Zener-Diode ZD4 und einem Transistor T4 geschaltet, wobei die Zener-Diode mit ihrem Kathodenkontakt und der Transistor T4 mit seinem Kollektor an diesem Knotenpunkt angeschlossen sind. Der Emitter des Transistor T4 ist an der Minusleitung und dem Basisanschluß an dem Knotenpunkt R5/V1 angeschlossen. Schließlich ist eine Zener-Diode ZD2 mit ihrer Anode an die Minusleitung und mit ihrer Kathode am Knotenpunkt RK/ZD1 angeschlossen. Sowohl im ersten als auch im zweiten Ausführungsbeispiel sind auf der Empfangsseite des Optokopplers V2 die Anschlüsse des Empfangstransistors mit den Dateneingangsleitungen DS und Gnd einer Steuereinheit 4 des elektronischen Vorschaltgerätes verbunden, während auf der Sendeseite des Optokopplers V1 die Anschlüsse der Sendediode mit Anschlüssen von Fehlerrückmeldeleitungen RS und Gnd der Steuereinheit 4 des elektronischen Vorschaltgerätes angeschlossen sind. Entsprechend den in Fig. 2(a) und (b) dargestellten Ausführungsbeispielen können die jeweiligen Masseleitungen Gnd der Datenleitung und der Fehlerrückmeldeleitungen zusammengefaßt und als eine gemeinsame Masseleitung Gnd ausgeführt werden.

Nachfolgend wird die Funktionsweise der zuvor unter Bezugnahme der auf Fig. 2(a) beschriebenen Schaltungsanordnung erläutert. Befindet sich die Zentral-Einheit 5 im Sendebetrieb, so werden entsprechend den gewünschten Sendedaten von dem Rechtecksignal-Generator Datensignale erzeugt. Diese weisen einen Signalpegel von 12 V auf und werden über den Stellschalter S1 auf die Datenleitung 1 geführt. Dadurch, daß sich am Eingang der Kopplungseinheit 3 die Brückenschaltung BR befindet, weist die Polung des Signalgenerators bzw. die Anschlußanordnung der Datenleitung 1 mit der zentralen Steuereinheit bzw. mit dem elektronischen Vorschaltgerät keinerlei Bedeutung auf. Somit werden die von der Kopplungseinheit 3 aufgenommenen Signale stets mit der richtigen Polung zu der Sendediode des Optokopplers V2 geleitet. Hier erfolgt durch eine Umwandlung der elektrischen Signale in Lichtsignale und durch eine empfangsseitige Rückwandlung der Lichtsignale in elektrische Signale eine galvanische Trennung zwischen der Steuereinheit 4 des elektronischen Vorschaltgerätes und der Datenleitung 1. Die derart weitergeleiteten Datensignale werden zu den Verarbeitungseinrichtungen der Steuereinheit 4 geführt und dort in üblicher Weise verarbeitet.

Werden von der zentralen Steuereinheit 5 keine Datensignale auf die Datenleitung 1 ausgesendet, so schaltet der Stellschalter S1 auf den Gleichspannungsgenerator DC um, es liegt also Nichtsendebetrieb vor. Nunmehr liegt auf der Datenleitung 1 eine Gleichspannung von beispielsweise 4 V an, wodurch dem elektronischen Vorschaltgerät die Empfangsbereitschaft der zentralen Steuereinheit 5 signalisiert wird, wobei durch den Brückengleichrichter BR im Eingang der Kontrolleinheit auch die Polung des Gleichspannungsgenerators DC von keiner Bedeutung ist. Dadurch, daß die Zener-Diode ZD1 eine Zenerspannung aufweist, deren Wert niedriger ist als der Signalpegel des Datensignalgenerators und größer als der Pegel des Gleichspannungsgenerators DC ist, beispielsweise 4.7 V, wird im Nichtsendebetrieb der Zentral-Einheit 5 der Optokoppler V2 mittels der Zener-Diode ZD1 ausgeschaltet. Die Sendediode des Optokopplers V2 verbraucht somit, wenn sich die Zentral-Einheit im Empfangsbetrieb befindet, keine elektrische Energie, die über die Datenleitung 1 zugeführt werden muß.

Sobald ein Signal von der Steuereinheit 4 des elektronischen Vorschaltgerätes EVG über die Rückmeldesignalleitung RS, wie beispielsweise eine Fehlerrückmeldung, an die Zentral-Einheit übermittelt werden soll, erfolgt ein Aussenden dieser Signale über die Sendediode des Optokopplers V1. Diese Signale werden in Analogie zu der Datenübertragung im Optokoppler V1 ebenfalls zunächst in optische Signale gewandelt und danach als elektrische Signale rückgewonnen, wodurch auch diese Verbindung zwischen der Steuereinheit 4 und der Datenleitung 1 galvanisch getrennt ist. Durch das Empfangen des von der Sendediode des Optokopplers V1 ausgesendeten optischen Signales wird die Leitfähigkeit des Empfangstransistors moduliert. Dadurch, daß in diesem Fall der Empfangstransistor des Optokopplers V1 zumindest teilweise leitend wird, erfolgt eine Belastung des Gleichspannungsgenerators DC in der Zentral-Einheit 5. Diese Belastung wird in der zentralen Steuereinheit 5 am Widerstand Ri ermittelt und ausgewertet.

Der maximale Stromverbrauch der Kopplungseinheit 3 wird durch den selbstleitenden MOS-Feldeffekttransistor T3 begrenzt. Dieser ist ohne Signal zwischen dem Gate-Anschluß und dem Source-Anschluß von sich aus leitend. Durch einen Strom, der über die Drain-Source-Strecke und somit auch über den Widerstand R3 fließt, erfolgt ein Spannungsabfall beim Widerstand R3, der gleichzeitig ein Spannungssignal zwischen dem Gate-Anschluß und dem Source-Anschluß hervorruft. Entsprechend dieses Signales erfolgt eine Verminderung der Leiträhigkeit des Transistors T3, wodurch eine Beschränkung der Stromaufnahme der Kopplungseinheit 3 erfolgt. Diese Strombegrenzung dient im wesentlichen als Sicherungseinrichtung, die eine Beschädigung der Bauelemente in der Kopplungseinheit verhindern soll, wenn an die Schnittstelle der Kopplungseinheit 3 eine falsch dimensionierte Signalquelle angeschlossen wird. Der Stromfluß durch den Optokoppler V2 wird durch den Widerstand RV begrenzt. Da mit dem MOS-Feldeffektor T3 bereits eine Strombegrenzungseinrichtung vorgesehen ist, kann dieser Widerstand RV an und für sich entfallen. Da der MOS-Feldeffekttransistor T3 jedoch für die Strombegrenzung des Empfangstransistors des Optokopplers V1 als auch der Sendediode des Optokopplers V2 dient, ist wegen der Bauelementeunterschiede einerseits und wegen einer starken Temperaturabhängigkeit des MOS-Feldeffekttransistors T3 andererseits die Verwendung des Widerstandes RV zu empfehlen. Gleiches gilt in Analogie für den Widerstand R1.

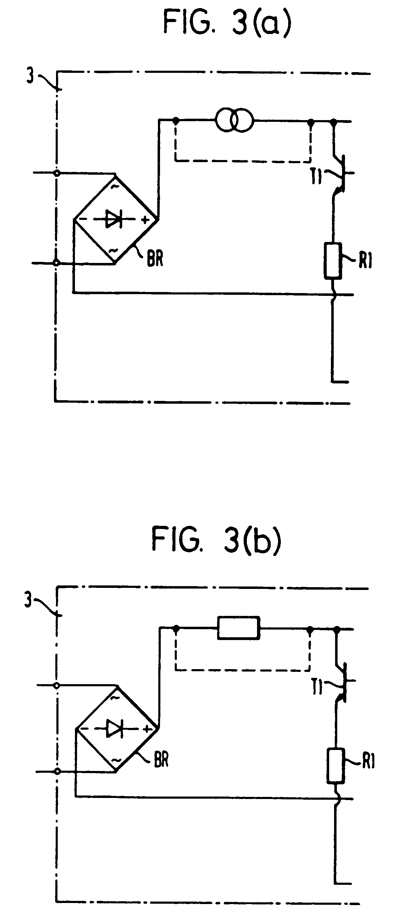

Die Konstantstromquelle mit dem MOS-Feldeffekttransistor T3, kann wie in Fig. 3 dargestellt, auch durch andere Schaltungsanordnungen, die Konstantstromquellen bzw. Strombegrenzungseinrichtungen darstellen, ersetzt werden. Hierzu sind vorzugsweise temperaturstabile Schaltungsanordnungen auszuwählen. Sollte auf die Schutzwirkung dieser Strombegrenzungseinrichtung vollständig verzichtet werden können, so kann die Konstantstromquelle, wie in Fig. 2 und 3 mittels getrichelter Linien angedeutet ist, weggelassen werden, wobei auch das einfache Ersetzen der Konstantstromquelle durch einen Widerstand denkbar wäre.

Nachfolgend werden die zusätzlichen Schaltungselemente des zweiten Ausführungsbeispiels gemäß Fig. 2(b) erläutert.

Liegt die von dem Gleichspannungsgenerator DC abgegebene 4 V Gleichspannung an der Datenleitung 1 an, so wird diese von der Zener-Diode ZD3 als eine zulässige Spannung bestimmt, wenn die Zenerspannung dieser Zener-Diode zwischen 15 V und 20 V liegt. Es wird nun über den Widerstand R4 der Transistor T1 angesteuert, wodurch über den Widerstand R1 die vom Gleichrichter BR weitergeleitete Spannung auf der Datenleitung 1 zwischen Kollektor und Emitter des zunächst sperrenden Transistors T4 anliegt. Dadurch, daß sich die Kollektor/Basis-Strecke des Empfangstransistors des Optokopplers V1 in Sperrpolung befindet, wird auf diesem Schaltungszweig auch nur der Sperrstrom des Empfangstransistors geführt, wodurch solange, wie keine Daten von dem elektronischen Vorschaltgerät in die Datenleitung ausgegeben werden sollen, auch von dem Optokoppler V1 kein nennenswerter über die Datenleitung zuzuführender Strom verbraucht wird. Sobald ein Signal von der Steuereinheit des elektronischen Vorschaltgerätes über die Rückmeldesignalleitung RS, wie beispielsweise eine Fehlerrückmeldung, an die zentrale Steuereinheit übermittelt werden soll, erfolgt ein Aussenden dieser Signale über die Sendediode des Optokopplers V1. Diese Signale werden in Analogie zu der Datenübertragung im Optokoppler V1 ebenfalls zunächst in optische Signale gewandelt und danach als elektrische Signale rückgewonnen, wodurch auch die Verbindung zwischen der Steuereinheit 4 des elektronischen Vorschaltgerätes und der Datenleitung 1 galvanisch getrennt ist. Durch das Empfangen des von der Sendediode des Optokopplers V1 ausgesendeten optischen Signals wird die Leitfähigkeit des Empfangstransistors moduliert, dieser schaltet über den Spannungsabfall am Widerstand R5 den Transistor T4 leitend, wodurch eine Belastung des Gleichspannungsgenerators DC in der zentralen Steuereinheit 5 erfolgt. Diese Belastung wird in der zentralen Steuereinheit 5 am Widerstand Ri ermittelt und ausgewertet.

Sobald am Eingang der Kopplungseinheit 3 eine unzulässig hohe Spannung anliegt, wird diese von der Zener-Diode ZD2, die eine Zenerspannung von beispielsweise 20 Volt aufweist, kurzgeschlossen. Auf diese Weise wird die unzulässig hohe Spannung im Empfangszweig der Kopplungseinheit 3 vor dem Optokoppler V2 abgeleitet. In dem angegebenen Ausführungsbeispiel sind somit Spannungen, die über 20 Volt liegen, als unzulässig hohe Spannung definiert. Diese Definition hängt jedoch vollständig von den zulässigen Grenzwerten des Optokopplers V2 ab, so daß bei einem entsprechend anders ausgewählten Optokoppler auch die Zener-Diode ZD2 entsprechend geändert dimensioniert werden muß.

Im Sendezweig der Kopplungseinheit 3 erkennt zunächst die Zener-Diode ZD3, daß eine unzulässig hohe Spannung vorliegt, wodurch sie leitend wird, so daß am Widerstand R6 eine Spannung abällt, die über den Widerstand R2 der Basis des Transistors T2 zugeführt wird. Dieser wird leitend und schließt die Basisemitterspannung des Transistors T1 kurz, so daß dieser ausschaltet und in einen nichtleitenden Zustand übergeht. Auf diese Weise werden unzulässig hohe Spannungen vom Transistor T4 und dem Empfangstransistor des Optokopplers V1 im Sendezweig der Kopplungseinheit 3 ferngehalten. Da das zuvor beschriebene Ausschalten des Sendezweiges in einigen Fällen nicht ausreichend schnell abläuft, ist zusätzlich für das kurzzeitige Auftreten einer Überspannung die Zener-Diode ZD4 vorgesehen.

Bei der Verwendung von Zener-Dioden als Überspannungsschutz ist darauf zu achten, daß die Zener-Diode beim Ableiten einer Überspannung gleichzeitig einen hohen Strom führen muß, wodurch in der Zener-Diode eine große Menge an elektrischer Energie in Wärmeenergie umgesetzt wird. Hierdurch kann es leicht zu einer Schädigung der Zener-Diode kommen, die dann bei einem Durchschmelzen die Verbindung öffnen würde, was zu einem Entfallen des vorgesehenen Überspannungsschutzes führen würde. Aus diesem Grund wurde im Empfangszweig der Kopplungseinheit 3 der Kaltleiter RK vorgesehen, der zunächst einen sehr geringen Widerstand aufweist, jedoch bei einem dauerhaft hohen Stromfluß, einhergehend mit seiner Erwärmung seinen Widerstandswert erhöht. Auf diese Weise wird bei einem dauerhaften Anliegen einer Überspannung diese von dem Kaltleiter RK übernommen und der Stromfluß durch die Zener-Diode ZD2 beschränkt. Ein analoger Schutz der Zener-Diode ZD4 ist nicht notwendig, da spätestens dann, wenn die Schaltungsanordnung mit den Transistoren T1 und T2 ausgeschaltet ist, die Zener-Diode ZD4 keine Überspannung mehr abzuleiten hat. Weiterhin ist darauf hinzuweisen, daß für den Sendezweig der Kopplungseinheit 3 ein Überspannungsschutz nur allein aus einer Zener-Diode mit einem Kaltleiter nicht zufriedenstellend arbeitet. Der Kaltleiter würde bei der Übertragung von Signalen an den Datenbus die Datenübertragung zu stark beeinträchtigen, da für die Funktion des Sendezweiges, die durch die Widerstandsmodulation mittels des Transistors T4 bestimmt ist, ein Fließen hoher Ströme vorgesehen ist. Ein Kaltleiter im Sendezweig der Kopplungseinheit würde in dem Fall, daß der Widerstand des Transistors T4 mit beispielsweise rechteckförmigem Kurvenverlauf variiert wird, zu einem Verschleifen dieses Kurvenverlaufes führen. Bei der Überwachung der Belastung der Gleichspannungsquelle DC am Widerstand R1 in der zentralen Steuereinheit 5 könnten dann solche Verschleifungen dazu führen, daß der Empfang in der Zentral-Einheit 5 gestört ist.

Wie durch die gestrichelte Leitungsführung in Fig. 2(a) und 2(b) dargestellt, kann eine beliebige Anzahl ähnlicher elektronischer Vorschaltgeräte an die Datenleitung 1 über jeweilige Kopplungseinheiten 3 angeschlossen werden. Es ergibt sich somit eine Anordnung, wie sie in Fig. 1 dargestellt ist. Gerade bei der Verwendung von einer Vielzahl solcher elektronischer Vorschaltgerate zeigt sich der Vorteil der beschriebenen Schaltungsanordnung. Ohne das Abschalten der Sendediode des Optokopplers V2 würde der Gleichspannungsgenerator DC ständig mit einem Gleichsignal belastet werden, was bei der Verwendung von vielen Geräten eine unnötig hohe Dimensionierung bezüglich der Belastbarkeit des Gleichspannungsgenerators DC in der Zentral-Einheit 5 notwendig machen würde. In der zuvor beschriebenen Schaltungsanordnung erfolgt im Empfangsbetrieb der Zentral-Einheit 5 hingegen eine Belastung des Gleichspannungsgenerators nur im Falle einer von einem der elektronischen Vorschaltgeräte kommenden Rückmeldung. Somit kann der Aufwand für die Gleichspannungswelle DC in der Zentral-Einheit 5 minimiert werden, was die Herstellungskosten für eine derartige Anordnung in erheblichem Umfang reduziert.

## Patentansprüche

1. Schaltungsanordnung zum Steuern einer Mehrzahl von Verbrauchern (4), insbesondere von Vorschaltgeräten für Gasentladungslampen, mit einer zentralen Steuereinheit (5), an die jeder Verbraucher über eine ihm zugeordnete Kopplungseinheit (3) und einen Datenbus (1) angeschlossen ist, wobei die Kopplungseinheit (3) einen Empfangszweig zur Übertragung von Steuerinformationen von der zentralen Steuereinheit (5) an den der Kopplungseinheit (3) zugeordneten Verbaucher (4) sowie einen Sendezweig zur Übertragung von Rückmeldeinformationen von dem Verbraucher (4) an die zentrale Steureinheit (5) aufweist,
**dadurch gekennzeichnet**,
daß jede Kopplungseinheit (3) eine Schalteinrichtung (ZD1) aufweist, die den Empfangszweig der Kopplungseinheit (3) bei Nichtsendebetrieb der zentralen Steuereinheit (5) in einen inaktiven Zustand versetzt, so daß der Empfangszweig keinen Strom oder nur einen sehr geringen Ruhestrom verbraucht, wobei der Sendezweig der Kopplungseinheit (3) ständig aktiv ist.

2. Schaltungsanordnung nach Anspruch 1,
**gekennzeichent durch**
eine Überspannungsschutz-Schaltung für den Empfangs- und/oder Sendezweig.

3. Schaltungsanordnung nach Anspruch 1,
**dadurch gekennzeichnet**,
daß in Serie mit dem Sendezweig ein von einem Überspannungsdetektor (ZD3, T2) gesteuerter Schalter (T1) angeordnet ist, der bei Überspannung öffnet und den Sendezweig von einem Bus (1) abkoppelt.

4. Schaltungsanordnung nach Anspruch 3,
**dadurch gekennzeichnet**,
daß zwischen dem Schalter (T1) und dem Sendezweig ein schneller Schutzschalter (ZD4) vorgesehen ist, der eine kurzzeitige Überspannung ableitet, wobei der schnelle Schutzschalter eine zum Sendezweig parallel geschaltete Zener-Diode (ZD4) ist, deren Zenerspannung unterhalb einer für den Sendezweig zulässigen Spannung liegt.

5. Schaltungsanordnung nach Anspruch 3 oder 4,
**dadurch gekennzeichnet**,
daß der Überspannungsdetektor eine Zener-Diode aufweist, die bei einer für den Sendezweig zulässigen Spannung den Schalter (T1) leitend schaltet und bei Erfassung einer Überspannung einen ersten Transistor (T2) aktiviert, der den Schalter (T1) nichtleitend schaltet.

6. Schaltungsanordnung nach einem der Ansprüche 3 bis 5,
**dadurch gekennzeichnet**,
daß der in Serie mit dem Sendezweig angeordnete Schalter ein zweiter Transistor (T1) ist.

7. Schaltungsanordnung nach einem der vorhergehenden Ansprüche,
**dadurch gekennzeichnet**,
daß parallel zum Empfangszweig eine mit einem Überlastschutz ausgestattete Zener-Diode geschaltet ist, die am Empfangszweig auftretende Überspannungen ableitet, wobei der Überlastschutz ein Kaltleiter (RK) ist, der zu einer Parallelschaltung aus Empfangszweig und Zener-Diode (ZD2) in Serie vorgeschaltet ist.

8. Schaltungsanordnung nach einem der vorhergehenden Ansprüche,
**dadurch gekennzeichnet**,
daß die zentrale Steuereinheit (5) entweder in einen Sendebetrieb oder in einen Empfangsbetrieb geschaltet ist und eine Ausgabeeinrichtung aufweist, die zumindest ein den Sendebetrieb der Steuereinheit (5) anzeigendes Signal oder ein den Nichtsendebetrieb der Steuereinheit (5) anzeigendes Signal an den Bus (1) ausgibt.

9. Schaltungsanordnung nach einem der vorhergehenden Ansprüche,
**dadurch gekennzeichnet**,
daß jede Kopplungseinheit (3) sowohl im Empfangszweig als auch im Sendezweig jeweils eine Übertragungseinrichtung aufweist, die den Bus von dem Verbraucher galvanisch trennen, wobei die jeweilige Übertragungseinrichtung mit einem Optokoppler (V1, V2) gebildet ist.

10. Schaltungsanordnung nach einem der vorhergehenden Ansprüche,
**dadurch gekennzeichnet**,
daß die Schalteinrichtung (ZD1) den Empfangszweig der Kopplungseinheit (3) in den inaktiven Zustand versetzt, wenn die zentrale Steuereinheit (5) kein den Sendebetrieb anzeigendes Signal über den Datenbus (1) abgibt.

11. Schaltungsanordnung nach einem der vorhergehenden Ansprüche,
**dadurch gekennzeichnet**,
daß die Schalteinrichtung (ZD1) einen Schalter aufweist, dessen Schaltzustand vom Spannungspegel der von dem Datenbus (1) kommenden Signale abhängt.

12. Schaltungsanordnung nach Anspruch 11,
**dadurch gekennzeichnet**,
daß der Schalter durch eine Zenerdiode (ZD1) gebildet ist.

13. Schaltungsanordnung nach einem der vorhergehenden Ansprüche,
**dadurch gekennzeichnet**,
daß in der Kopplungseinheit eine Strombegrenzungsschaltung vorgesehen ist, die die maximale Stromaufnahme der Kopplungseinheit bestimmt, wobei die Strombegrenzungsschaltung mittels einer Konstantstromquelle gebildet ist, die einen MOS-Feldeffekttransistor (T3) enthält.

14. Schaltungsanordnung nach einem der vorhergehenden Ansprüche,
**dadurch gekennzeichnet**,
daß die Kopplungseinheit (3) zum Anschluß an den Doctenbus (1) einen Verpolungsschutz aufweist, der mit einer Gleichrichter-Brückenschaltung (BR) gebildet ist.

## Claims

1. Circuit arrangement for controlling a number of loads (4), particularly ballasts for gas discharge lamps, with a central control unit (5), to which each load is connected via an associated coupling unit (3) and a data bus (1), the coupling unit (3) having a receiving branch for transmitting control information from the central control unit (5) to the loads (4) associated with the coupling unit (3), as well as a transmitting branch for transmitting acknowledgement information from the load (4) to the central control unit (5), characterised in that each coupling unit (3) has a switching device (ZD1), which places the receiving branch of the coupling unit (3) into an inactive state in the case of a non-transmitting mode of the central control unit (5), so that the receiving branch draws no current or only a very low quiescent current, the transmitting branch of the coupling unit (3) being constantly active.

2. Circuit arrangement according to claim 1, characterised by an overvoltage protection circuit for the receiving and/or transmitting branch.

3. Circuit arrangement according to Claim 1, characterised in that a switch (T1) controlled by an overvoltage detector (ZD3, T2) and which opens in the case of an overvoltage and decouples the transmitting branch from a bus (1), is arranged in series with the transmitting branch.

4. Circuit arrangement according to Claim 3, characterised in that a rapid protection switch (ZD4), which removes a brief overvoltage, is provided between the switch (T1) and the transmitting branch, the rapid protection switch being a Zener diode (ZD4) connected in parallel with the transmitting branch and whose Zener voltage is below a voltage permitted for the transmitting branch.

5. Circuit arrangement according to claim 3 or 4, characterised in that the overvoltage detector has a Zener diode, which in the case of a permissible voltage for the transmitting branch conductively switches the switch (T1) and on detecting an overvoltage activates a first transistor (T2), which switches in non-conducting manner the switch (T1).

6. Circuit arrangement according to one of the claims 3 to 5, characterised in that the switch arranged in series with the transmitting branch is a second transistor (T1).

7. Circuit arrangement according to one of the preceding claims, characterised in that in parallel to the receiving branch is connected a Zener diode equipped with overload protection, which removes overvoltages occurring on the receiving branch, the overload protection being a PTC thermistor (RK), which is connected in series upstream of a parallel connection of the receiving branch and the Zener diode (ZDZ).

8. Circuit arrangement according to one of the preceding claims, characterised in that the central control unit (5) is connected either in a transmitting mode or in a receiving mode and has an output device, which emits at least one signal indicating the transmitting mode of the control unit (5) or a signal indicating the non-transmitting mode of the control unit (5) to the bus (1).

9. Circuit arrangement according to one of the preceding claims, characterised in that each coupling unit (3), both in the receiving branch and in the transmitting branch, has a transmitting device, which isolates the bus from the load, the transmitting device being formed by an optical coupler (V1, V2).

10. Circuit arrangement according to one of the preceding claims, characterised in that the switching device (ZD1) brings the receiving branch of the coupling unit (3) into the inactive state if the central control unit (5) does not deliver across the data bus (1) a signal indicating the transmitting mode.

11. Circuit arrangement according to one of the preceding claims, characterised in that the switching device (ZD1) has a switch, whose switching state is dependent on the voltage level of the signals coming from the data bus (1).

12. Circuit arrangement according to claim 11, characterised in that the switch is formed by a Zener diode (ZD1).

13. Circuit arrangement according to one of the preceding claims, characterised in that in the coupling unit is provided a current limiting circuit, which defines the maximum power consumption of the coupling unit, the current limiting circuit being formed by a constant current source, which contains an MOS field effect transistor.

14. Circuit arrangement according to one of the preceding claims, characterised in that the coupling unit (3) for connection to the data bus (1) has reverse polarity protection formed by a rectifier bridge circuit (BR).

## Revendications

1. Agencement de circuit pour la commande de plusieurs utilisateurs (4), notamment de ballasts de lampes à décharge gazeuse, comportant une unité de commande (5) centrale, à laquelle chaque utilisateur est connecté par l'intermédiaire d'une unité de couplage (3) associée et d'un bus de données (1), l'unité de couplage (3) comportant une branche de réception pour la transmission d'informations de commande de l'unité de commande (5) centrale vers l'utilisateur (4) associé à ladite unité de couplage (3) et une branche d'émission pour l'émission d'informations de réponse de l'utilisateur (4) vers l'unité de commande (5) centrale, caractérisé par le fait que chaque unité de couplage (3) comporte un dispositif de commutation (ZD1) qui, en l'absence d'émission par l'unité de commande (5) centrale, commute la branche de réception de l'unité de couplage (3) dans un état non actif, de telle sorte que la branche de réception ne consomme pas de courant ou seulement un courant de repos très faible, la branche d'émission de l'unité de couplage (3) étant active en permanence.

2. Agencement de circuit selon la revendication 1, caractérisé par un circuit de protection contre les surtensions pour la branche de réception et/ou la branche d'émission.

3. Agencement de circuit selon la revendication 1, caractérisé par le fait qu'un commutateur (T1) commandé par un détecteur de surtension (ZD3, T2) est branché en série avec la branche d'émission, lequel commutateur s'ouvre en cas de surtension et découple la branche d'émission d'un bus (1).

4. Agencement de circuit selon la revendication 3, caractérisé par le fait qu'un interrupteur de protection (ZD4) à déclenchement rapide qui élimine une surtension de courte durée est prévu entre le commutateur (T1) et la branche d'émission, l'interrupteur à déclenchement rapide étant une diode Zener (ZD4) qui est branchée en parallèle avec la branche d'émission et dont la tension de Zener est inférieure à une tension admissible pour la branche d'émission.

5. Agencement de circuit selon la revendication 3 ou 4, caractérisé par le fait que le détecteur de surtension comporte une diode Zener, qui, en présence d'une tension admissible pour la branche d'émission, commute le commutateur (T1) à l'état passant et qui, lorsqu'une surtension est détectée, active un premier transistor (T2) qui commute le commutateur (T1) à l'état non passant.

6. Agencement de circuit selon l'une des revendications 3 à 5, caractérisé par le fait que le commutateur monté en série avec la branche d'émission est un deuxième transistor (T1).

7. Agencement de circuit selon l'une des revendications précédentes, caractérisé par le fait qu'une diode Zener pourvue d'une protection contre les surintensités, qui élimine les surtensions apparaissant dans la branche de réception, est connectée en parallèle avec la branche de réception, la protection contre les surcharges étant un thermistor (RK) qui est branché en série avec un circuit parallèle formé de la branche de réception et d'une diode diode Zener (ZD2).

8. Agencement de circuit selon l'une des revendications précédentes, caractérisé par le fait que l'unité de commande (5) centrale est commutée soit en mode émetteur, soit en mode récepteur, et comporte un dispositif de sortie qui délivre au bus (1) au moins un signal indiquant le fonctionnement en émission de l'unité de commande (5) ou un signal indiquant le fonctionnement sans émission de l'unité de commande (5).

9. Agencement de circuit selon l'une des revendications précédentes, caractérisé par le fait que chaque unité de couplage, aussi bien dans la branche d'émission que dans la branche de réception, comporte un dispositif de transmission qui sépare galvaniquement le bus de l'utilisateur, le dispositif de transmission concerné étant formé d'un coupleur opto-électronique (V1, V2).

10. Agencement de circuit selon l'une des revendications précédentes, caractérisé par le fait que le dispositif de commutation (ZD1) commute la branche de réception de l'unité de couplage (3) à l'état non actif lorsque l'unité de commande (5) centrale ne délivre, par l'intermédiaire du bus de données (1), aucun signal indiquent le fonctionnement en émission.

11. Agencement de circuit selon l'une des revendications précédentes, caractérisé par le fait que le dispositif de commutation (ZD1) comprend un commutateur dont l'état de commutation dépend du niveau de tension des signaux en provenance du bus de données (1).

12. Agencement de circuit selon la revendication 11, caractérisé par le fait que le commutateur est formé d'une diode (ZD1).

13. Agencement de circuit selon l'une des revendications précédentes, caractérisé par le fait qu'il est prévu, dans l'unité de couplage, un circuit limiteur de courant qui mesure l'intensité maximale du courant d'utilisation de l'unité de couplage, le circuit limiteur de courant étant formé d'une source de courant constant qui comprend un transistor à effet de champ (T3) de type MOS.

14. Agencement de circuit selon l'une des revendications précédentes, caractérisé par le fait que l'unité de couplage (3) pour la connexion au bus de données (1) comporte une protection contre les inversions de polarité qui est formée d'un circuit redresseur en pont (BR).
